(19) Europäisches Patentamt
European Patent Office
Office européen des brevets

(11) **EP 2 566 736 B1**

(12) **EUROPEAN PATENT SPECIFICATION**

(45) Date of publication and mention
of the grant of the patent:
**06.09.2017 Bulletin 2017/36**

(21) Application number: **11714785.0**

(22) Date of filing: **19.04.2011**

(51) Int Cl.:
**B60W 30/14** *(2006.01)*  **B60K 31/00** *(2006.01)*
**B60W 50/02** *(2012.01)*

(86) International application number:
**PCT/EP2011/056201**

(87) International publication number:
**WO 2011/131648 (27.10.2011 Gazette 2011/43)**

(54) **VEHICLE SPEED LIMITING SYSTEM**

SYSTEM ZUR FAHRZEUGGESCHWINDIGKEITSBESCHRÄNKUNG

SYSTÈME DE LIMITATION DE VITESSE DE VÉHICULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.04.2010 GB 201006976**

(43) Date of publication of application:
**13.03.2013 Bulletin 2013/11**

(73) Proprietor: **AGCO GmbH**
**87616 Marktoberdorf (DE)**

(72) Inventors:
• **HARRIES, Heinz-Georg**
**87640 Biessenhofen (DE)**
• **WINKELMANN, Thomas**
**87616 Marktoberdorf (DE)**

(74) Representative: **AGCO Intellectual Property
Department
Abbey Park Stoneleigh
Kenilworth, Warwickshire CV8 2TQ (GB)**

(56) References cited:
**EP-A1- 2 008 902**      **EP-A1- 2 018 991**
**EP-A1- 2 169 251**      **DE-A1- 4 405 093**
**DE-A1-102008 053 908**      **US-A1- 2005 087 378**

## Description

The invention relates to a system for maintaining the maximum speed which a vehicle can reach when different diameter tyres are used.

It is customary for the manufactures of the vehicles with designed maximum speeds to provided arrangements to guarantee the adherence of the speed limitation. For example, the speed of 90 km/h from motor trucks is regulated by limitation of the engine rotation speed on the basis of the measured driving speed. The driving speed is measured via the rotation speed of an axle. Via the rotation speed of the axle and the diameter of the tyre the driving speed can be calculated. This method of vehicle speed limitation operates acceptable in vehicles where tyre diameter remains substantially constant. Examples of prior art speed regulating systems can be found in patent publications DE 10 2008 053908 A1, and EP 2 018 991 A1.

In contrast, due to the wide range of operational requirements of agricultural tractors, a wide variety of different types of tyres with different widths and diameters (and therewith different tyre circumferences) are used.

These different types of tyres must be recorded in the vehicle documents. In practice, e. g., the circumference of all allowed rear wheel tyres on tractors with 360 HP varies from 5.718 m to 6.460 m. Thus at a rear wheel rotation speed of say 150 rpm and a tyre circumference of 5.718 m a speed of 51.5 km/h is given, while with a tyre circumference of 6.460 m a speed of 58.1 km/h is given. Thus the circumference is a crucial factor for the achievement of a desired maximum speed at a particular engine speed.

In practice, this fact causes that the manufacturer of tractors to limit the gear box ratio or the engine rotation speed, in dependence of the tyre size (and therewith the tyre circumference), so that even with the largest tyres permitted the rated maximum speed cannot be exceeded.

In addition, there are also legal requirements concerning the lowest value of the maximum speed. E.g in Germany, a tractor sold as suitable for driving a nominal maximum speed of 60 km/h has an upper tolerance limit of 65 km/h and a lower tolerance limit of 55 km/h. If the lower tolerance is undercut, the tractor can not be sold as a tractor with 60 km/h capability.

For the registration and the selection of the appropriate wheels, the following procedure is necessary to fulfil European and German legal requirements:

> The largest tyre fitting with the installation space and gearbox capability is chosen utilizing the upper tolerance limit of the nominal maximum speed (65 km/h). Thereby, the maximum output rotation speed of the gearbox is identified. The smallest tyre is then chosen by considering the maximum output rotation speed of the gearbox and the lower tolerance limit (55 km/h).

Limiting the engine speed only can cause engines to no longer be driven at their optimal speed so that torque, fuel consumption and emissions all suffer. Alternatively, the limitation of the maximum output rotation speed of the gearbox is enabling the engine to be driven in its optimum operation range while the gear box ratio is adjusted (when engine speed varies) to reach the maximum output rotation speed of the gearbox.

Alternatively only tyres with the same circumference are recorded in the vehicle documents. This would reduce the operation opportunities of the vehicle. If an unrecorded tyre is used, this new tyre must be recorded at the registration office. Such a limitation is not practical for many tractor users.

Alternatively, the costumer has to have a correction of the maximum output rotation speed of the gearbox after assembling a smaller tyre. For various reasons, this impact on vehicle control can only be done be an authorized dealer or garage and results in extra costs.

This situation is made worse since some tractor users fit bigger diameter tyres than their tractors are set up to operate on so that, for example, on a tractor designed to have a maximum speed of 65 Km/h (60 km/h plus 5 km/h tolerance using the allowed upper tolerance) speeds of 73.4 km/h can be achieved. This causes problems concerning the operating licence and security of the vehicle.

It is an object of the present invention to provide a system for the regulating of a vehicle independent of the tyre size fitted.

Thus according to the present invention there is provided a system as claimed in claim 1. The system regulates the maximum speed of a vehicle having wheels fitted with tyres and driven from an engine via a driveline with a total overall gear ratio, the system including a means for determining the actual vehicle speed of the vehicle without using a calculation based on engine speed, and a control unit which adjusts the engine speed and/or overall driveline gear ratio taking into account the diameter of the tyres fitted to the wheels so that the maximum speed which the vehicle can attain remains substantially constant at a predetermined value irrespective of the diameter of the tyres fitted to the wheels.

The means for determining the actual vehicle speed can be via a radar sensor or GPS signal or any other appropriate measuring method.

If an outage of the vehicle speed signal occurs (through shade of the GPS signal in a tunnel) the system will be reset to the manufacturer programming. Resetting should not cause an abrupt deceleration (for example during a overtaking). It is envisaged that the value of the correction signal is accepted until an operating state of the vehicle is reached, in which a tyre change would be possible. For example this is given if the motor is shutdown or the motor is shutdown for more than 1 hour (time for tyre change).

Tyre changes can be detected by a sensor, such as a contract switch to the rim, or tyre recognition can be provided to the control unit by means of a radio frequency identification device (RFID) provided on each tyre.

The invention provides a speed limitation which is enabling a flexible use of different tyre sizes while providing constant maximum velocity without any additional effort. The costumer can easily change tyres and use small tyres especially used in non-agricultural use of tractors like construction business.

The present invention will now be described by way of example only, with reference to the accompanying drawings in which:-

Figure 1 shows a side view of a tractor, and

Figure 2 shows a diagram of a tractor maximum speed regulating system in accordance with the present invention.

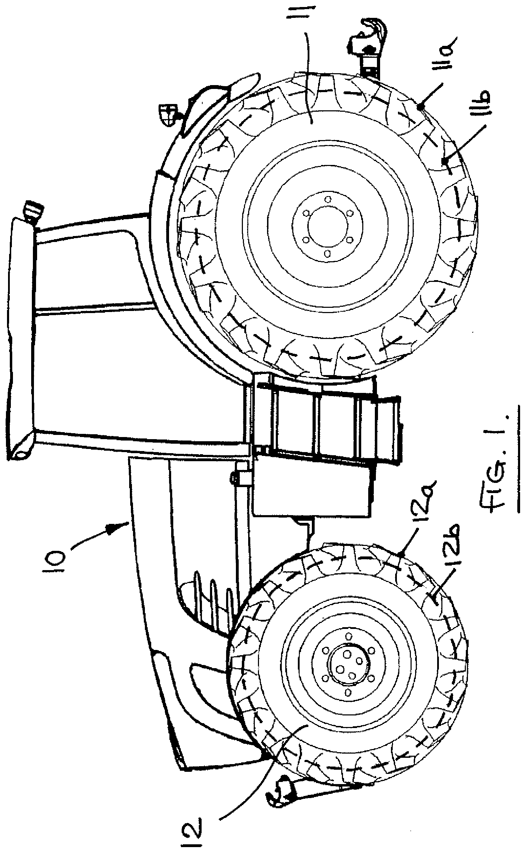

Figure 1 shows a tractor 10 with rear wheels 11 and front wheels 12. The tyres of these wheels each have two circumferences designated 11a,11b and 12a,12b respectively where 11a and 12a illustrate the biggest diameter tyres and 11b and 12b illustrate the smallest tyres which are suitable for fitting.

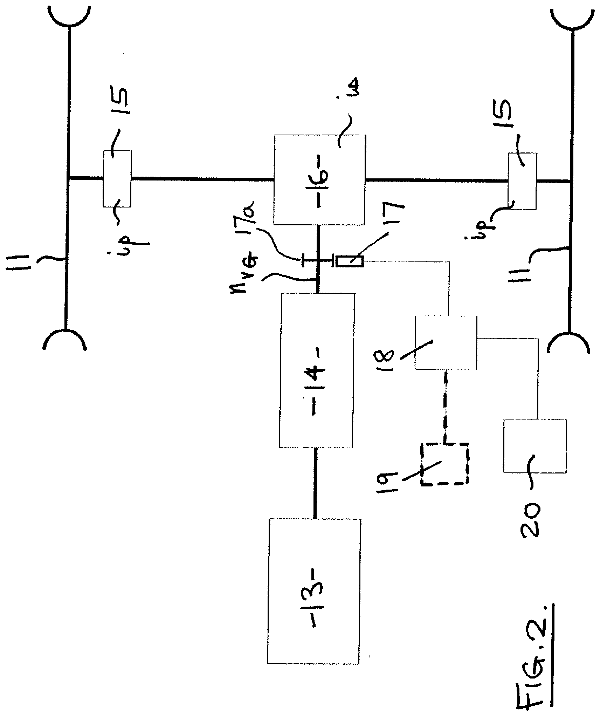

Figure 2 shows diagrammatically a complete driveline for the rear wheels of the tractor 10.

The driveline of the front wheels is connected with the driveline of the rear wheels by a fixed gear ratio so that the consideration of the rear wheel driveline is sufficient to explain the present invention. The drive torque of the combustion engine 13 is transmitted via the gearbox 14 (of a CVT type) to the rear wheels 11 and front wheel 12. Between the gearbox 14 and the rear wheels 11 are planetary reduction gear 15 and a central differential 16. The ratio of the planetary transmission 15 and the central differential 16 are not variable, so that the whole ratio of both gears is assumed to be a fix value. In the present case the ratio of the planetary transmission 15 is designated as $i_P$ = 9.2 and the central differential 16 is designated as $i_D$ = 3.58, so that the product of both ratios is an overall ratio of $i_G$ = 32.97.

Furthermore a rotation speed sensor 17 is provided after the gearbox 14. The rotation speed sensor 17 measures the output rotation speed of the gearbox 14. This signal is transmitted to a control unit 18. The control unit 18 can be connected temporarily via an interface to a programming unit 19 to save or change parameters of the control unit 18. The programming unit 19 can be used as an end of line programming device to store vehicle parameter after assembly or as a mobile programming device to change parameter in workshops or in the field.

Below the limitation of the maximum speed is described.

In practice a maximum road speed is defined with a permitted deviation such as 40 km/h ± 3 km/h or say 60 km/h ± 5 km/h, so that conformity is guaranteed with tolerances. As this is not relevant for the procedure itself, only an exact value is considered below.

After the assembly of the tractor 10 at the end of the assembly line, the circumference of the biggest rear wheel tyre 11 recorded in the registration is entered via the programming unit 19. Additionally the permitted maximum road speed is supplied as there can be different maximum road speeds for the same type of tractor depending on country legislation.

If, for example, the allowed maximum vehicle road speed $v_{maxzul}$ = 60 km/h and the largest tyre circumference $U_{Rmax}$ is 6.460 metres then the maximum output rotation speed $n_{VGmax}$ of the gearbox 14 is calculated by the formula:

$$n_{VGmax} = (i_G \times v_{maxzul}) / U_{Rmax} = 5103.20 \text{ rpm}$$

This value is compared with the rotation speed, which is measured by the rotation speed sensor 17. If this rotation speed is exceeded, the gear ratio of the gearbox 14 is changed to reduce the gearbox output speed. As will be appreciated, the gearbox output speed is proportional to the speed of rotation of the engine.

Thus, engine rotation speed and gear ratio can be changed to give the required gearbox output speed and to optimise fuel consumption or emissions or tractive power.

This value of $n_{VGmax}$ = 5130.20 rpm is assigned to a wheel with a periphery $U_{Rmax}$ = 6.460 m and must be preset at the end of assembly line as the biggest tyre circumference $U_{Rmax}$, because this is the biggest allowed tyre.

For different reasons the customer can need another, smaller tyre after the delivery of the vehicle. If now, the smallest allowed tyre with a tyre circumference of $U_{Rmin}$ = 5.718 m is mounted, the maximum speed which can now be reached at a wheel speed of $n_{VGmax}$ = 5103.20 rpm: is given by the formula:

$$V_{realzul} = (n_{VGmax} \times U_{Rmin}) / i_G = 53.1 \text{ km/h}$$

This means that the vehicle is limited to a speed of 53.1 km/h and therefore 11 % slower than the rated driving speed (60 km/h). Furthermore the time spend when using the vehicle for transport duties is extended causing higher costs and requiring more time for the work.

To achieve the maximum permitted road speed, the appropriate tyre circumference $U_{Rmin}$ of 5.718 m must be entered through an authorised person.

This causes additional costs and downtime for the customers, especially when tyres are changed regularly.

For the manufacturer this problem of customers changing tyre diameters is also of concern. For example, the customer could mount a bigger tyre after the settings for a smaller tyre have been entered in the control unit 18 thus allowing the tractor to reach a maximum speed of 67.8 km/h, if the settings in control unit 18 are not adjusted. As a remedy, in accordance with the present invention, the real speed of the vehicle is measured by GPS sensor 20 and thereby variations in tyre circumference and gearbox output rotation speed can be corrected accordingly.

In the present case, by receipt of a GPS signal, it is checked whether due to limitation of the output rotation speed (on the basis of tyre circumference) a maximum road speed of 60 km/h is reached.

If the control unit 18 is operating with a tyre circumference of $U_{Rmax}$=6.460 m entered and the real tyre circumference $U_{Rreal}$ is 5.718 m, the GPS signal would measure a real speed of only 53.1 km/h, as instead of the expected 60km/h.

The stored value of maximum gearbox output speed (5103.20rpm) entered in the control unit 18 (corresponding to a tyre circumference $U_{Rmin}$= 6.460 m) is now corrected. To reach a maximum speed of 60 km/h with a tyre with $U_{Rmin}$ of 5.718 m, the rotation speed limit $n_{VGmax}$ = 5765.4 rpm is set. For each in-between size, the system would determine appropriate values of gearbox output speed. If the engine rotation speed is changed, then the ratio of the gearbox 14 is adjusted so that $n_{VGmax}$ = 5765.4 rpm is not exceeded.

If the GPS signal fails, the value $U_{Rmax}$ for the biggest tyre circumference is used as a default value to prevent excessive maximum road speed. To prevent an abrupt deceleration during a overtaking if the reset should initiated immediately time delay could be provided and a warning could be shown to the driver before the reset occurs.

In the described embodiment, the real speed is measured by means of a GPS signal. It is envisaged that every other sensor or signal can be taken, e.g. used for other functions e.g. anti-lock brake system or traction control.

If the circumference of the tyre is not known for entering into the system it can calculated by driving the vehicle over a marked distance and counting the number of revolutions required to cover the marked distance either manually or using the speed sensor 17 which operates with a toothed disc 17a. For example, if the marked distance is 100 metres and the tyre rotates 16.5 times this gives a circumference of 6.061 m which is then used as the $U_R$ value to set the maximum output rotation speed $n_{VGmax}$.

In a further embodiment the correction value is accepted only until the vehicle is shut down as then it would be possible to change the tyres.

The system may sense how long the vehicle has been shut down and if the shut down time is not long enough for a tyre change to have been made, the corrected value of gearbox output speed is still accepted by the control unit 18.

A further improvement is it to detect the tyre change. A sensor would recognize if the tyres are removed. If so, the correction value would be deleted and the original value or an appropriate new value accepted. The changing of a tyre could be detected by a sensor such as a contact switch on the wheel rim or, for example, each tyre could be equipped with a radio frequency identification device (RFID) which automatically transfers relevant tyre data to the control unit 18. The control unit 18 then recognises without contact which tyre and tyre circumference is mounted and overwrites limitation settings entered in the control unit 18 as described above.

The described embodiment is shown with a CVT gear box. It will be understood that a conventional multi-ration gearbox can be used whereby the value of maximum gearbox output speed depends on the gear chosen (and locked if speed is exceeded).

The described embodiment the limitation of the speed of the vehicle is mainly caused by legal requirements, especially the absolute limits and the tolerances. It is envisaged that the limitation can also be required for technical or safety reasons.

## Claims

1. A system for regulating the maximum speed of an agricultural tractor (10) having wheels (11, 12) fitted with tyres and driven from an engine (13) via a driveline (14, 15, 16) with a total overall gear ratio, the agricultural tractor (10) arranged for use with different tyres having different tyre circumferences, the tractor (10) having a preset maximum tyre circumference allowed for the tyres of the tractor, the system including a means (20) for determining the actual vehicle speed of the tractor without using a calculation based on engine speed, and a control unit (18) which adjusts the engine speed and/or overall driveline gear ratio taking into account the diameter of the tyres fitted to the wheels (11, 12) so that the maximum speed which the tractor (10) can attain remains substantially constant at a predetermined value irrespective of the diameter of the tyres fitted to the wheels, **characterised in that**, in the event of the failure of the vehicle speed determining means (20) the control unit (18) assumes that tyres (11,12) having a circumference corresponding to the preset maximum tyre circumference are fitted to the tractor.

2. A system according to claim 1 in which the means (20) for determining the actual tractor speed comprises a GPS based system.

3. A system according to claim 1 in which the means (20) for determining the actual speed of the tractor comprises a radar based system.

4. A system according to any one of claims 1 to 3 in which abrupt decelerations in tractor speed as a result of engine speed and/or overall driveline ration changes are prevented.

5. A system according to claim 4 in which abrupt decelerations are avoided by the use of a time delay.

6. A system according to claim 4 in which a driver warning of immanent deceleration is provided.

7. A system according to any one of claims 1 to 6 in which the diameter of the tyres fitted to the tractor is entered as an input into the control unit (18) by a programming unit (19).

8. A system according to any one of claims 1 to 7 in which sensing means are provided for sensing a change in tyres fitted to the tractor.

9. A system according to claim 8 in which the sensing means also communicates to the control unit (18) the diameter of the tyres fitted to the tractor.

10. A system according to any one of claims 1 to 7 in which the predetermined maximum tractor speed is entered as an input into the control unit (18) by a programming unit (19).

11. An agricultural tractor (10) having a system as claimed in any one of claims 1-10.

**Patentansprüche**

1. System zum Regulieren der Maximalgeschwindigkeit eines landwirtschaftlichen Traktors (10) mit Rädern (11, 12), die mit Reifen ausgestattet und von einem Motor (13) über einen Antriebszweig (14, 15, 16) mit einem Gesamtübersetzungsverhältnis angetrieben sind, wobei der landwirtschaftliche Traktor (10) für eine Benutzung mit unterschiedlichen Reifen unterschiedlicher Reifenumfänge ausgebildet ist, wobei der Traktor (10) einen vorbestimmten maximalen Reifenumfang aufweist, der für die Reifen des Traktors zulässig ist, wobei das System ein Mittel (20) zum Bestimmen der tatsächlichen Geschwindigkeit des Traktors ohne Benutzung einer Berechnung basierend auf der Motorgeschwindigkeit und eine Steuer/Regel-Einheit (18) aufweist, die die Motorgeschwindigkeit und/oder das Antriebszweiggesamtübersetzungsverhältnis unter Berücksichtigung des Durchmessers der auf den Rädern (11, 12) aufgezogenen Reifen einstellt, so dass die Maximalgeschwindigkeit des Traktors (10), die dieser erreichen kann, im Wesentlichen konstant bei einem vorbestimmten Wert unabhängig von dem Durchmesser der auf den Rädern aufgezogenen Reifen bleibt, **dadurch gekennzeichnet, dass** im Fall des Versagens des Fahrzeuggeschwindigkeitsbestimmungsmittels (20) die Steuer/Regel-Einheit (18) annimmt, dass Reifen (11, 12) auf den Traktor aufgezogen sind, die einen Umfang besitzen, der dem vorbestimmten maximalen Reifenumfang entspricht.

2. System nach Anspruch 1, wobei das Mittel (20) zum Bestimmen der tatsächlichen Traktorgeschwindigkeit ein GPS-basiertes System aufweist.

3. System nach Anspruch 1, wobei das Mittel (20) zum Bestimmen der tatsächlichen Traktorgeschwindigkeit ein Radar-basiertes System aufweist.

4. System nach einem der Ansprüche 1 bis 3, bei dem abrupte Verzögerungen der Traktorgeschwindigkeit als Ergebnis von Veränderungen der Motorgeschwindigkeit und/oder des Antriebszweiggesamtübersetzungsverhältnisses verhindert werden.

5. System nach Anspruch 4, bei dem abrupte Verzögerungen durch die Benutzung einer zeitlichen Verzögerung vermieden werden.

6. System nach Anspruch 4, bei dem ein Fahrerwarnhinweis betreffend eine immanente Verzögerung bereitgestellt wird.

7. System nach einem der Ansprüche 1 bis 6, bei dem der Durchmesser der auf den Traktor aufgezogenen Reifen durch eine Programmiereinheit (19) als ein Eingangswert in die Steuer/Regel-Einheit (18) eingegeben wird.

8. System nach einem der Ansprüche 1 bis 7, bei dem ein Erfassungsmittel zum Erfassen einer Änderung der auf den Traktor aufgezogenen Reifen vorhanden ist.

9. System nach Anspruch 8, bei dem das Erfassungsmittel der Steuer/Regel-Einheit (18) auch den Durchmesser der auf den Traktor aufgezogenen Reifen mitteilt.

10. System nach einem der Ansprüche 1 bis 7, bei dem die vorbestimmte Maximalgeschwindigkeit des Traktors durch eine Programmiereinheit (19) als ein Eingangswert in die Steuer/Regel-Einheit (18) eingegeben wird.

11. Landwirtschaftlicher Traktor (10) mit einem System nach einem der Ansprüche 1-10.

**Revendications**

1. Dispositif de régulation de la vitesse maximum d'un tracteur agricole (10) comportant des roues (11, 12) équipées de pneus et entraînées par un moteur (13) par l'intermédiaire d'une transmission (14, 15, 16) avec un rapport de réduction global total, le tracteur agricole (10) étant agencé de manière à être utilisé avec différents pneus présentant différentes circonférences de pneu, le tracteur (10) présentant une circonférence de pneu maximum prédéfinie autorisée pour les pneus du tracteur, le dispositif comportant un moyen (20) destiné à déterminer la vitesse réelle de véhicule du tracteur sans utiliser de calcul sur la base du régime moteur, et une unité de commande (18) qui ajuste le régime moteur et/ou le rapport de réduction de transmission global en prenant en compte le diamètre des pneus montés sur les roues (11, 12) de telle sorte que la vitesse maximum que le tracteur (10) peut atteindre reste sensiblement constante à une valeur prédéterminée indépendamment du diamètre des pneus montés sur les roues, **caractérisé en ce que**, en cas de défaillance du moyen de détermination de vitesse de véhicule (20), l'unité de commande (18) suppose que des pneus (11, 12) présentant une circonférence correspondant à la circonférence de pneu maximum prédéterminée sont montés sur le tracteur.

2.  Dispositif selon la revendication 1, dans lequel le moyen (20) destiné à déterminer la vitesse de tracteur réelle comprend un dispositif basé sur le GPS.

3.  Dispositif selon la revendication 1, dans lequel le moyen (20) destiné à déterminer la vitesse réelle du tracteur comprend un dispositif basé sur le radar.

4.  Dispositif selon l'une quelconque des revendications 1 à 3, dans lequel des décélérations brutales de vitesse de tracteur en résultat d'un changement de régime moteur et/ou de rapport de transmission global sont empêchées.

5.  Dispositif selon la revendication 4, dans lequel des décélérations brutales sont évitées en utilisant une temporisation.

6.  Dispositif selon la revendication 4, dans lequel une alerte conducteur de décélération imminente est prévue.

7.  Dispositif selon l'une quelconque des revendications 1 à 6, dans lequel le diamètre des pneus montés sur le tracteur est entré en tant qu'entrée dans l'unité de commande (18) par une unité de programmation (19).

8.  Dispositif selon l'une quelconque des revendications 1 à 7, dans lequel des moyens de détection sont agencés afin de détecter une modification sur des pneus montés sur le tracteur.

9.  Dispositif selon la revendication 8, dans lequel le moyen de détection communique aussi à l'unité de commande (18) le diamètre des pneus montés sur le tracteur.

10. Dispositif selon l'une quelconque des revendications 1 à 7, dans lequel la vitesse maximum de tracteur prédéterminée est entrée en tant qu'entrée dans l'unité de commande (18) par une unité de programmation (19).

11. Tracteur agricole (10) comportant un dispositif selon l'une quelconque des revendications 1 à 10.

FIG. 1.

FIG.2.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102008053908 A1

- EP 2018991 A1